# EUROPEAN PATENT APPLICATION

(11) **EP 2 708 996 A1**
(43) Date of publication of application: **19.03.2014**
(21) Application number: 12786353.8
(22) Date of filing: 11.05.2012
(51) Int. Cl.: G06F 3/048, G06F 3/041, G09G 5/00, G09G 5/36

(54) **DISPLAY DEVICE, USER INTERFACE METHOD, AND PROGRAM**

(30) Priority: 13.05.2011 JP 2011108669
(71) Applicant: NTT DOCOMO, INC., Chiyoda-ku Tokyo 100-6150 (JP)
(72) Inventor: HASHIDA, Naoki, Tokyo 100-6150 (JP); TSUGE, Yuki, Tokyo 100-6150 (JP); KAWANO, Natsuko, Tokyo 100-6150 (JP); SHIMOO, Kousei, Tokyo 100-6150 (JP); TAKAYAMA, Fukiko, Tokyo 100-6150 (JP); SASAHARA, Yuko, Tokyo 100-6150 (JP); MURAKAMI, Keiichi, Tokyo 100-6150 (JP); HAMATSU, Makoto, Tokyo 100-6150 (JP)
(74) Representative: HOFFMANN EITLE
(86) International application number: PCT/JP2012/062148
(87) International publication number: WO 2012/157562

(57) **Abstract**

A display apparatus (100) includes: a display (131) having a screen in which an image is displayed; an input unit (132) having a surface on which a user's touch is sensed; a display controller that displays a plurality of individual icons and one or more category icons each of which represents a category of one or more individual icons; and a motion recognition unit (112) that detects a pinching-out motion to widen a distance between two points of touch on the surface based on a motion sensed by the input unit, wherein the display controller changes a state of one or more individual icons associated with at least one category from an enfolded state in which the one or more individual icons are not displayed to an unfolded state in which the one or more individual icons are displayed.

## Description

### Technical Field

The present invention relates to a graphical user interface (GUI).

Some electronic devices having a touch-screen are provided with a GUI in which icons are aligned, and in which appearances change in response to a user's touch of a screen. Patent document 1 discloses a portable electronic device, in which a tray 216 for accommodating icons having functionalities frequently used by a user and a tray 214 for accommodating icons having a functionality which are activated infrequently by the user are displayed, and in which the icons can be moved from tray 216 to tray 214 in response to a user's operation. Generally, such icons can either be added or deleted.

### [Prior art]

### [Patent document]

[Patent Document 1] JP-A-2009-151821

### Summary of the invention

### Problem to be solved by the invention

When the number of icons displayed in a list of icons is large, it may be difficult for a user to locate a required icon. For example, when icons are grouped by folders, directories or other schemes used for control of display of icons collectively, a user is required to open such folders one by one to find a required icon. In view of the foregoing, an object of the present invention is to change the appearances of a group of icons associated with each other by an intuitive operation that is different from operations employed in the prior art.

### Means for solving the problem

According to an aspect of the present invention, there is provided a display apparatus including: a display having a screen in which an image is displayed; an input unit having a surface on which a user's touch is sensed; a display controller that displays a plurality of individual icons, and one or more category icons each of which represents a category of one or more individual icons; and a motion recognition unit that detects a pinching-out motion for widening a distance between two points of touch on the surface based on a motion sensed by the input unit, wherein the display controller changes a state of one or more individual icons associated with at least one category from an enfolded state in which the one or more individual icons are not displayed to an unfolded state in which the one or more individual icons are displayed.

In a preferred embodiment, the display controller changes a number of categories within which one or more individual icons are displayed in the unfolded state, based on an amount or velocity of two points of touch applied in the pinching-out motion detected by the motion recognition unit.

In another preferred embodiment, the display controller changes the one or more categories within which the one or more individual icons are displayed in the unfolded state based on the positions of the two points of touch detected by the motion recognition unit.

In yet another preferred embodiment, the display controller changes the one or more categories within which the one or more individual icons are displayed in the unfolded state based on a difference in an amount of movement of the two points of touch in the pinching-out motion as detected by the motion recognition unit.

In yet another preferred embodiment, the motion recognition unit detects a pinching-in motion in which two points of touch are used to narrow a distance between the two points, based on the user's touch sensed by the input unit, and upon detection of the pinching-in motion by the motion recognition unit, the display controller, changes the state of one or more individual icons associated with at least one of the one or more categories, from the unfolded state to the enfolded state.

Preferably, the display controller changes a number of the one or more categories within which the one or more individual icons are not displayed, based on an amount of movement or velocity of the two points of touch in the pinching-in motion detected by the motion recognition unit.

Preferably, the display controller changes the one or more categories within which the one or more individual icons are not displayed in the enfolded state, based on the positions of the two points of touch in the pinching-in motion detected by the motion recognition unit.

Preferably, the display controller changes the one or more categories within which the one or more individual icons are not displayed in the enfolded state based on a difference in amounts of movement of the two points of touch in the pinching-in motion detected by the motion recognition unit.

In yet another aspect of the present invention, there is provided a method of generating a user interface at a display apparatus in which a display that display(s) a plurality of individual icons and one or more category icons each of which represents a category of one or more individual icons on a screen and an input unit having a surface on which the user's touch is sensed are provided, the method including: a first step of detecting a pinching-out motion to widen a distance between two points touching the surface when a one or more category icons are displayed on the screen; and a second step of changing, upon detection of the pinching-out motion, a state of one or more individual icons associated with at least one category from an enfolded state in which the one or more individual icons are not displayed to an unfolded state in which the one or more individual icons are displayed.

In yet another aspect of the present invention, there is provided a display apparatus including: a display having a screen in which an image is displayed; an input unit having a surface on which a user's touch is sensed; a display controller that displays a plurality of individual icons and one or more category icons each of which represents a category of one or more individual icons; and a motion recognition unit that detects a motion by which a distance in two points of touch changes based on the user's touch sensed by the input unit, wherein the display controller changes a state of one or more individual icons associated with at least one category between an enfolded state in which the one or more individual icons are not displayed and an unfolded state in which the one or more individual icons are displayed.

In yet another aspect of the present invention, there is provided a program that causes a computer of a display apparatus, in which a display that displays a plurality of individual icons and one or more category icons each of which represents a category of one or more individual icons on a screen and an input unit having a surface on which ¥ a user's touch is sensed are provided, to execute: a first step of detecting a pinching-out motion to widen a distance between two points touching the surface when one or more category icons are displayed on the screen; and a second step of changing, upon detection of the pinching-out motion, a state of one or more individual icons associated with at least one category from an enfolded state in which the one or more individual icons are not displayed to an unfolded state in which the one or more individual icons are displayed.

### Effects of the invention

According to the present invention, appearances of icons associated with each other are changed by an intuitive operation that is different from operations employed in the prior art.

### Brief description of the drawings

Fig. 1 shows an overview of a display apparatus;
Fig. 2 is a block diagram showing a hardware configuration of the display apparatus;
Fig. 3 shows an example of a screen in which icons are displayed;
Fig. 4 is a block diagram showing a functional configuration of a main controller;
Fig. 5 is a flowchart of controlling a display executed at the display apparatus;
Fig. 6 is an example of a screen transition according to the first embodiment;
Fig. 7 is a flow chart of a collective unfolding according to the second embodiment;
Fig. 8 is a flow chart of a collective folding according to the second embodiment;
Fig. 9 is an example of a table in which a relationship between the amount of shift d and the number of categories to be unfolded or enfolded is defined;
Fig. 10 is a flow chart of a collective folding according to the third embodiment;
Fig. 11 is a flow chart of a collective unfolding according to the third embodiment; and
Fig. 12 shows an example of amounts of shift d1 and d2 in detail.

### Explanation of reference numerals

100 ··· display apparatus, 101 ··· screen , 110··· main controller, 111··· sensing unit , 112···motion recognition unit , 113···main controller, 120··· memory , 130··· touch screen, 131··· display, 132··· input unit, 140··· communications unit

### Embodiments for carrying out the invention

### First embodiment

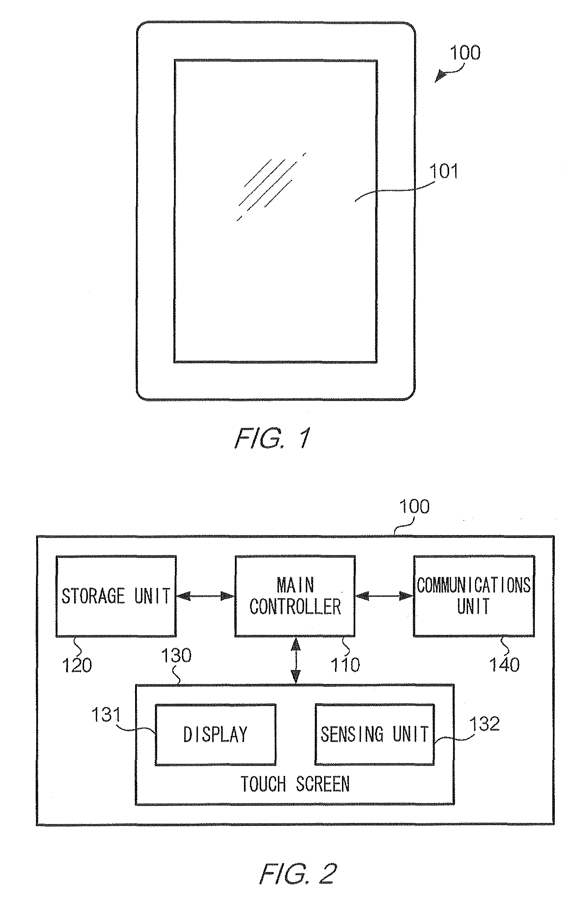

Fig.1 shows an overview of a display apparatus 100 according to an embodiment of the present invention. Display apparatus 100 is an electronic device having a screen 101. Screen 101 is configured to display images and to receive an input made with a user's finger(s). In this example, a shape of screen 101 is (a) rectangular and vertically long. Screen 101 may be configured to display an image three-dimensionally in glassless or using other technologies of stereography.

The size of display apparatus 100 is suitable for a user to input instructions onto screen 101 by a finger(s). For example, display apparatus 100 is a mobile phone including smart phones, tablet PC, slate PC, or Personal Digital Assistants (PDA). The size of display apparatus 100 may be suitable for being hand held. Alternatively, display apparatus 100 may be configured for desk use or attachment to a holder for a use of being put on a desk or attached to a holder. Also, display apparatus 100 is not necessarily a plate-like shape.

Fig. 2 is a block diagram showing a hardware configuration of display apparatus 100. Display apparatus 100 includes at least a main controller 110, memory 120, touch screen 130, and communications unit 140. Display 100 may further include a speaker and microphone (and their interfaces) and a camera (including video camera), and a vibrator.

Main controller 110 controls all the elements of display apparatus 100. Main controller 110 includes a processor such as a Central Processing Unit (CPU) and a storage unit such as a Read Only Memory (ROM), and Random Access Memory (RAM). Main controller 110 generates a GUI of the present invention by executing a program stored in a ROM or memory 120. Also, main controller 110 is configured to execute a plurality of application software (hereinafter referred to as applications) to implement functionalities of the applications in the display apparatus 100. Main controller 110 may be capable of performing a multi-tasking operation in which two or more tasks or processes are executed in parallel. A multi-core hardware configuration may be adopted for performing the multi-tasking.

Memory 120 stores data. Memory 120 may be a hard drive, flash memory or other storage medium used to store data for access by main controller 110. Memory 120 may be of a removable type that can be attached to and detached from display apparatus 100. Programs executable by main controller 110 and image data for display on screen 101 can be stored in memory 120. It is possible to store an identifier for identifying a user in memory 120, when a single user uses two or more display apparatuses 100 or a single display apparatus 100 is used by two or more users.

Touch screen 130 displays an image and receives an input from a user. Specifically, touch screen 130 includes a display 131 that displays an image and an input unit 132 that receives an input from the user.

Display 131 includes a display panel including a liquid crystal or organic electroluminescence for displaying an image and a driving circuit for driving the display panel. As a result, an image according to image data supplied from main controller 110 is displayed on screen 101. Input unit 132 is provided on screen 101 covering screen 101. A two-dimensional sensor for sensing a touch by a finger(s) on screen 101 is provided in input unit 132. Input unit 132 outputs to main controller 110 operation information representing a position (hereinafter referred to as "a point of touch" at which a finger(s) touches. Input unit 132 supports multi-touch functionality in which two or more touches performed at the same time can be detected.

Communications unit 140 transmits and receives data. Communications unit 140 may be a network interface for connecting a network such as a mobile communications' network and the Internet. Alternatively, communications unit 140 can be configured to communicate with other electronics devices without using a network. For example, communications unit 140 may wirelessly communicate with other devices based on a Near Field Communication (NFC) standard. The data transmitted or received by communications unit 140 may include electronic money (electronic coupon) or other information representing electronically exchangeable money or strip.

The explanation of a hardware configuration of display apparatus 100 has been completed. With the stated configuration, display apparatus 100 executes various applications. Functionalities of the applications executed in display apparatus 100 may include displaying news, weather forecasts, and images (including static and moving images), reproduction of music, and enabling a user to play a game or read an electronic book. In addition, the applications may include a mailer or web browser. The applications include an application that can be executed in parallel and an application that can be executed as a background application. The applications may be pre-installed in display apparatus 100. Alternatively, the user may buy the application from a content provider and download it via communications unit 140.

Display apparatus 100 executes an application for displaying icons of applications. Hereinafter, an application is referred to as "an icon management application" and an application associated with an icon is referred to as "a target application." A target application may include all applications executable by display apparatus 100 except for an icon management application or a part of applications. In other words, at least a part of the executable applications can be a subject of management performed by the icon management application.

The icon management application enables a user to manage or execute target applications. Specifically, functionalities of the icon management application include classifying target applications into a predetermined category and defining a new category for a target application. Each category of a target application has attributes represented by a "game" or "sound," or the like, which makes it easy to understand a type of a target application. The attributes assigned to each category may represent a frequency or history with respect to a usage of a target application. For example, one of the attributes is defined as a "frequently used target application." The icon management application may determine a category for a target application based on the attributes (frequency of use, for example) of the target application or on an instruction input by a user's finger(s).

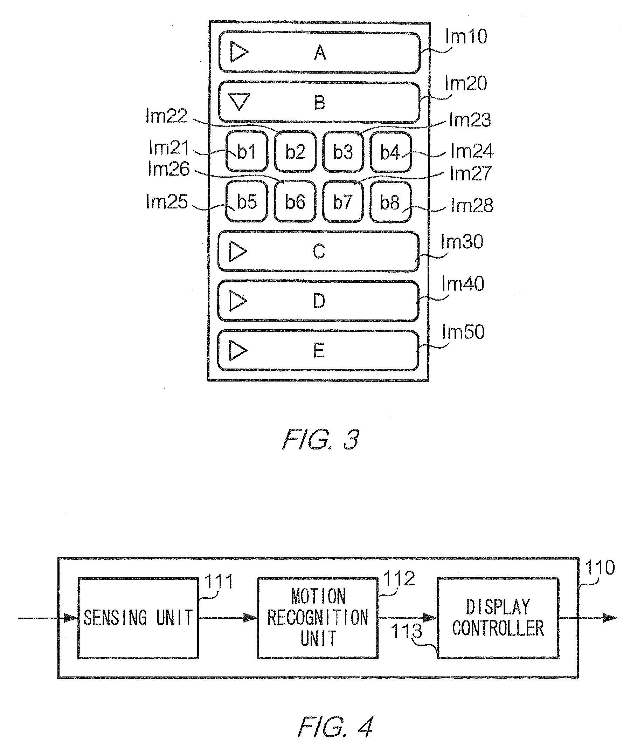

Fig. 3 shows an example of a screen image (hereinafter referred to as an icon list) generated by the icon management application. The icon list includes individual icon(s) and category icon(s). In the figure, Im10, Im20, Im30, Im40, Im50 are category icons, and Im21, Im22, ···, Im27, and Im28 are individual icons. Individual icons Im21 to Im28 belong to category "B." For convenience of explanation, the categories are named "A" through "E". An individual icon corresponds to a target application. An image of an individual icon may be predetermined according to a target application. An image of an individual icon may be generated by the user or determined by selection by the user of an image(s) from among pre-set images. Positions of the individual icons are determined such that individual icons belonging to a same category are displayed in a single and non-separated area. In the example of Fig. 3, individual icons are allocated by up to 4 in each line. A 5th or more individual icon is allocated to a next line. Similarly, lines are additionally prepared for more individual icons in the same category.

A category icon represents a category associated with one or more individual icons. Thus, individual icons associated with a category icon belong to a single category represented by the category icon. In this embodiment, when an individual icon(s) is displayed, a category icon is allocated above the individual icon(s).

Display of individual icons is controlled on a category basis. In the example of Fig. 3, only individual icons belonging to category "B" are displayed, and other individual icons of target applications that belong to category A, B, D, or E are not displayed. Hereinafter, for the sake of convenience, a state in which individual icons associated with a category icon are currently displayed is referred to as "an unfolded state" and individual icons associated with a category icon are not displayed is referred to as "an enfolded state." Similary, displaying individual icons associated with a category icon in the enfolded state is referred to as "unfolding," and hiding individual icons associated with a category icon is referred to as "enfolding." In the example shown in Fig. 3, individual icons associated with category B are in an unfolded state and individual icons associated with categories A, C, D, or E are in an enfolded state.

The icon list is not necessarily displayed on screen 101 in its entirety. In other words, a user can view the entire icon list by scrolling the list. A vertical length of the icon list is variable depending on a number of unfolded icons.

Fig. 4 is a block diagram showing functional modules pertaining to a display of icons in relation to the functional configuration of main controller 110. Main controller 110 executes a predetermined program(s) to implement functionality of a sensing unit 111, motion recognition unit 112, and display controller 113. These functionalities may be realized by co-operation of two or more programs. For example, the functionality of sensing unit 111 and motion recognition unit 112 are provided by executing system software such as an operating system (OS), not by applications. In this case the functionality of display controller 113 is implemented by executing the icon management application

Sensing unit 111 obtains operation information. Specifically, sensing unit 111 obtains operation information from input unit 132 of touch screen 130. Operation information represents one or more coordinates of point of touch on screen 101 in two-dimensional orthogonal coordinates system with a predetermined position (for example, center or a corner of screen 101) defined as an origin. Operation information changes in response to a movement of user's finger on screen 101, resulting in a change of a sensed point of touch.

Motion recognition unit 112 detects a type of motions made by the user, based on operation information obtained by sensing unit 111. In this embodiment, motion recognition unit 112 detects at least three types of motion, that is, a tapping, pinching-in motion, and pinching-out motion. Motion recognition unit 112 may detect a dragging, flicking, and double tapping, in which tappings are performed twice in succession, and other types of motions.

Tapping is a motion of touching a point on a screen 101. A pinching-in motion and pinching-out motion are motions of touching two points on screen 101 at the same time. The pinching-in motion is a motion of touching two points on screen 101 and then moving the points of touch to narrow a distance between the two points of touch. The pinching-in motion is also referred to as "pinch closing." The pinching-out motion is a motion of first touching two points on screen 101 and then moving the two points of touch to expand a distance between the two points of touch. The pinching-out motion is also referred to as " pinch opening." In the pinching-in motion and the pinching-out motion, a series of motions starting from fingers touching screen 101 and ending with disengaging the fingers from screen 101 are recognized as a single operation. It is noted that each of the pinching-in motion and the pinching-out motion involve finger motion in both a horizontal direction and a vertical direction with respect to screen 101.

Display controller 113 controls display of an image in display 131. Display controller 113 has at least functionalities of unfolding and folding of individual icons in response to a user's operation when motion recognition unit 112 determines that the operation is a tapping pinching-in motion or a tapping pinching-out motion. Upon detection of a user's tapping on a particular individual icon, display controller 113 depicts an image of the particular individual icons associated with a target application.

In the configuration described above, display apparatus 100 executes the icon management application to control displacement of individual icons. After the icon management application is exacted, at least one category icons is always displayed on screen 101, but an individual icon(s) is not necessarily displayed. For example, display apparatus 100 may display individual icons such that the displayed individual icons do not differ from when the icon management application was executed at a most recent previous time.

In this embodiment, display apparatus 100 provides a user with a GUI in which unfolding and enfolding are performed differently depending on whether a user's operation is a tapping, pinching-in motion or a tapping pinching-out motion. Specifically, display apparatus 100 enfolds or unfolds only individual icons associated with a particular category of icon(s) in response to tapping, and enfolds or unfolds all of the individual icons associated with all of the category icons displayed in the icons list in response to a pinching-in motion or pinching-out motion.
Details of processing of control of a display performed in display apparatus 100 will now be provided.

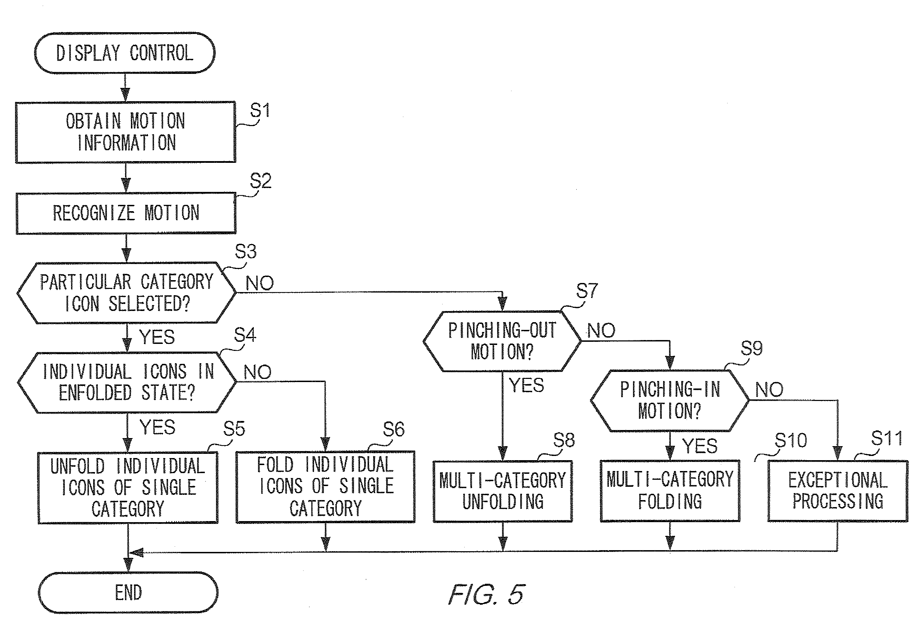

Fig. 5 is a flowchart showing a control sequence performed by main controller 110 of display apparatus 100. As shown in the figure, main controller 110 initiates the display controlling process upon receipt of operation information (step S1). Thus, when the icon list is displayed, the processing shown in Fig. 5 is performed by main controller 110, each time operation information is obtained.

In step S1, main controller 110, obtains operation information. Main controller 110 determines a coordinate(s) of one or more points of touch and a change in the coordinate(s) based on the obtained operation information. Next, main controller 110, based on the operation information, recognizes user's operation (motion) (step S2). In step S2, main controller 110 determines a position to which the operation is pointing as well as a type of the operation. It is possible to detect the amount of movement of the point of touch and a velocity of the movement by main controller 110, which will be described later.

Next, main controller 110, based on a detection result performed in step S2, determines whether the user's operation is intended to designate a particular category icon (step S3). A motion for designating a particular category icon is a tapping on an area of screen 101 where particular category icons are displayed. Thus, main controller 110 determines whether a user's operation is a tapping and a tapped point is in a category icon in step S3. This operation is one of the examples of motions for selecting a category icon(s) employed in the present invention.

When it is determined that the selecting operation is directed to a particular category icon, main controller 110 determines whether an individual icon(s) associated with the category icon is in the enfolded state (step S4). When the individual icon(s) is in the enfolded state, main controller 110 unfolds the individual icon(s) (step S5). When the individual icon(s) is not folded (i.e., is in an unfolded state), main controller 110 enfolds the individual icon(s) (step S6). By doing so, main controller 110 switches the state of the individual icons associated a particular category icon between the unfolded state and enfolded state in response to a user's selection of the particular category icon.

When an operation different from the operation for selecting a particular category icon(s) is detected, main controller 110 determines whether the detected operation is a pinching-out motion or pinching-in motion (steps S7 and S9, respectively). When a pinching-out motion is detected, main controller 110 unfolds all of the individual icons associated with all of the displayed category icons collectively (step S8). When a pinching-in motion is detected, main controller 110 enfolds all of the individual icons associated with all of the displayed category icons collectively (step S10). Hereinafter, processing of steps S8 and S10 are referred to as "a collective unfolding" and "a collective folding", respectively. It is noted that steps S7 and S9 can be performed in a reverse order.

In step S8, main controller 110 remains the individual icon(s) unfolded for a category within which the individual icon(s) is in the unfolded state. Similary, main controller 110 remains the individual icon(s) enfolded for a category within which the individual icon(s) is in the enfolded state in step S10.

When main controller 110 determines that a detected operation is neither a pinching-out motion nor a pinching-in motion in Steps S7 and S9, respectively, main controller 110 initiates an exceptional processing according to the user's operation (step S11). For example, when an individual icon has been tapped, main controller 110 executes a target application associated with the individual icon to display a content of the target application. The exceptional processing may include a process in which no particular processing is performed, in other words, no response to a user's operation is generated.

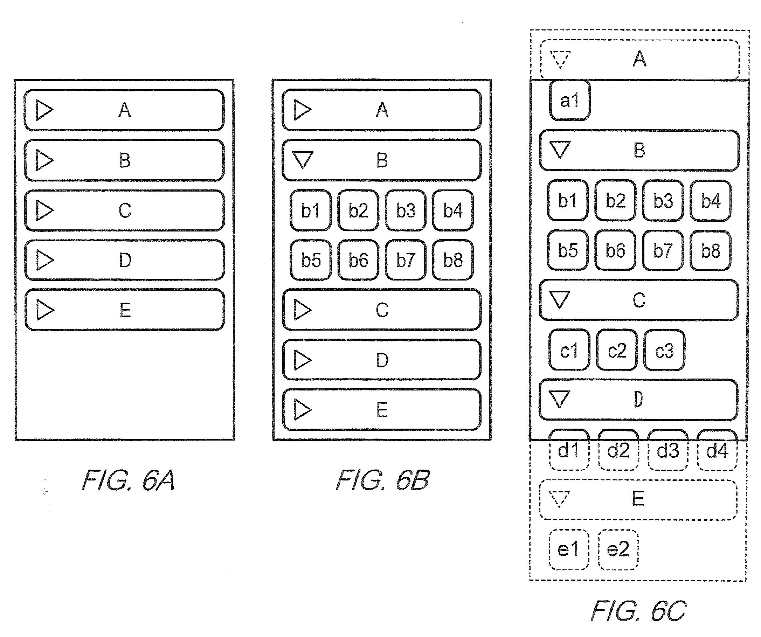

Fig. 6 shows an example of a screen transition of the icon list according to a control of a diaply according to this embodiment. Fig. 6A shows an example of a screen which occurs immediately after a processing of step S10, in which all of the individual icons are enfolded. Fig. 6B shows a screen in which only the individual icons associated with category B are unfolded. This state may occur when the category icon (Im 20 of Fig. 3) of category B has been selected when all of the individual icons were enfolded. Fig. 6C shows a screen that occurs immediately after a processing of step S8, in which all of the individual icons are unfolded. It is noted that in Fig. 6C an image drawn by dashed line indicates an image allocated outside a display area of screen 101. a1, b1 to b8, c1 to c3, d1 to d4, and e1 to e2 show individual icons of target applications associated with categories A, B, C, D, and E, respectively.

In the display control of this embodiment, the user can perform enfolding/unfolding for a particular category(s) or all of the categories by a single action. Thus, a user can adjust the number of displayed individual icons by an operation depending on the situation. For example, a user performs a pinching-out motion to search all the executable target applications, whereas the user performs a tapping to designate a particular selection category so as to search for an intended target application when the user can estimate its category.

In the display control of this embodiment, a state of the individual icons changes from the unfolded state to the enfolded state by a pinching-out motion to expand two fingers (widen a distance thereof), and changes from the enfolded state to the unfolded state by a pinching-in motion to close the fingers (narrow the distance). As individual icons that have been enfolded are re-displayed by the process, the process of activating the unfolded state has a conceptual similarity to a motion of expanding fingers. Similary, the process of activating the enfolded state has a conceptual similarity to a motion of closing expanding fingers. In this regard, the display control according to the present embodiment enables the user to change display statuses of individual icon(s) by an intuitive operation.

### Second embodiment

In this embodiment, a hardware configuration of display apparatus 100 is the same as in the first embodiment but details of the display control are different from the first embodiment. Specifically, in this embodiment the number of categories in which individual icons are to be enfolded or unfolded changes depending on the position or the amount of movement of a point of touch. In other words, the number of displayed individual icons changes depending on the position or the amount. Since a configuration of a display of this embodiment is similar to display apparatus 100 of the first impediment, like numerals are used with regard to a display of this embodiment and (a) detailed explanation thereof is therefore omitted.

In this embodiment, a process is different from the first embodiment in steps S8 (collective unfolding) and step S10 (collective folding). Processing other than steps S8 and S10 are similar to first embodiment. In this embodiment, collective unfolding and collective enfolding are performed when the determination performed in steps S7 or S9 is "YES".

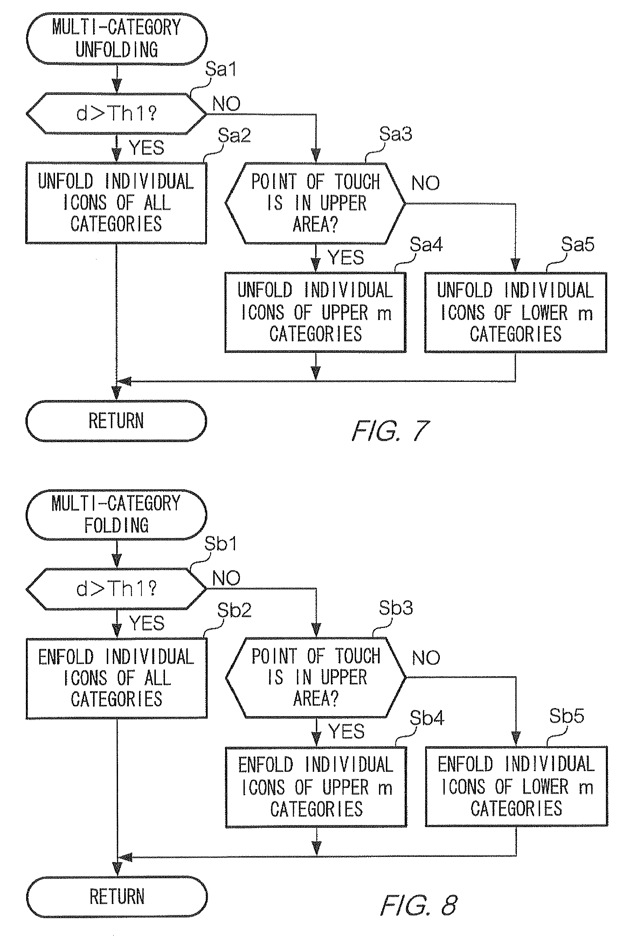

Fig. 7 shows collective unfolding of this embodiment. In the collective unfolding of this embodiment, main controller 110 calculates an amount d of movement of two points of touch in a pinching-out motion, and determines whether d exceeds a threshold Th1 (step Sa1). The amount d is, for example, an average of trajectories each formed by a finger. Alternatively, the count d may be a larger or smaller one of the trajectories. Instead of a length of a trajectory, the amount d may be equal to a distance between an initial point and end point of the movement. The threshold Th1 may be determined based on a size of screen 101.

If the amount d is greater than the threshold Th1, main controller 110 unfolds collectively all of the individual icons associated with all of the categories displayed in the icon list (step Sa2). A folding process of individual icons is similar to that of step S8.

If the amount d is equal to or smaller than the threshold Th1, main controller 110, restricts the number of categories in which individual icons are unfolded to m. The parameter m is an integer that is more than 2 and less than the number (i.e., 5 in the example shown in Fig. 6A) of all the foldable categories. Also, main controller 110 determines which category(s) is to be unfolded based on a position of two points of touch in a pinching-out motion. The determination will now be described in detail.

Main controller 110 identifies positions of two points of touch in a pinching-out motion, and determines whether the identified positions are located in an upper half area (step Sa3). More specifically, a representative point between the two identified positions is located in the upper half area of screen 101 is determined. The representative point may be chosen as a middle point of a line segment formed by the two points. Other methods of determining the representative point can be employed. For example, the determination is made based on either one of the points of touch.

Upon determination that a pinching-out motion is performed in the upper half area, main controller 110 unfolds individual icons associated with m category icons from the top (step Sa4). If it is determined that the pinching-out motion is performed at the lower half area, main controller 110 unfolds individual icons associated with m category icons from the bottom (step Sa5). For example, in a case where the number of category icons included in the icon list is 5 as shown in Fig. 6A and m equal to 3, main controller 110 unfolds individual icons of categories A, B, and C in step Sa4, and unfolds individual icons of categories C, D, and E in step Sa5.

Fig. 8 is a flowchart showing a collective folding of this embodiment. The collective folding is similar to the collective unfolding shown in Fig. 7 except for that an unfolding is replaced with a folding. Thus, a detailed explanation thereof is omitted. It is noted that values of m are not necessarily the same in the collective unfolding and collective enfolding

In the display control according to this embodiment, the user can change categories to be enfolded or unfolded according to details (a position or amount of movement) of a pinching-out motion or pinching-in motion. In this embodiment, the more amount the user moves the fingers, the more categories to be enfolded or unfolded are designated. Also, the user performs an operation in the upper half of screen 101 to unfold categories displayed above. In this regard, there is a sensory similarity between a user's motion and a folding/unfolding processing. This enables the user to operate display apparatus 100 intuitively.

It is possible to give a stronger relevance between a category or categories within which individual icons are enfolded or unfolded and a user's motion to display apparatus 100. For example, when the user performs pinching-in motion vertically with regard to the screen, if there is displayed one or more category icons between an initial upper point of touch and an initial lower point of touch, display apparatus 100 enfolds individual icons associated with the one or more category icons, and does not fold individual icons associated with other category icons, which include a category icon(s) located above the upper initial point of touch and below the lower initial point of touch. In this case, the number of categories within which individual icons are enfolded/unfolded changes depending on positions of fingers, regardless of a value of m.

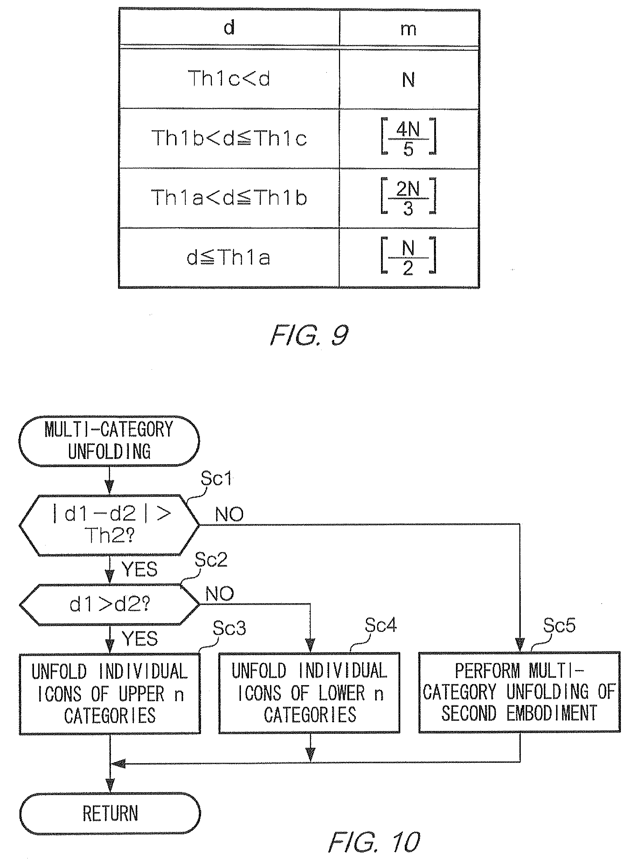

It is possible to introduce levels in a threshold of a moving mount d. Fig. 9 shows an example of a table defining a relationship between the amount of move moment d and the number of categories within which the individual icons are enfolded/unfolded. In this example, Th1a, Thlb, and Thlc are thresholds where Thla<Thlb<Thlc. N is the number of all categories included in the icon list. "[ ]" is a Gauss notation. For example, "[N/2]" represents an integer, which is the largest in the numbers equal to or smaller than N/2.

In this example, Main controller 110 sets a value for the parameter m such that m increases in stages in accordance with an increase of the count of movement d. For example, if N=5, main controller 110 collectively enfolds or unfolds individual icons associated with categories by two when d ≦ Th1a, by three when Th1a<d≦Th1b,by four when Th1b<d≦Th1c, and by five when Thlc<d. Alternatively, values of the thresholds and the paramour m may be defined by the user.

### Third embodiment

In this embodiment a configuration of a display is the same as of the first and second embodiments, but details of a collective unfolding and collective folding included in a display control are different from the first and second embodiment. Specifically, in this embodiment, based on the amount of movement between two points of touch in a pinching-in motion or pinching-out motion, categories within which individual icons are enfolded /unfolded are determined. Since a configuration of a display of this embodiment is similar to that of display apparatus 100 of the first impediment, like numerals are used with regard to a display of this embodiment and detailed explanations thereof are therefore omitted.

In this embodiment, it is assumed that a pinching-in motion and pinching-out motion are performed vertically with respect to screen 101. Hereinafter, of two points of touch, the upper one is referred to as "the first point of touch" and the lower one is referred to as "the second point of touch". When the pinching-in motion and pinching-out motion is performed with a thumb and forefinger, normally, a position of the forefinger is the first touch point and a position of the thumb is the second points of touch..

Fig. 10 is a flowchart showing a collective unfolding of this embodiment. In the collective unfolding of this embodiment, main controller 110 detects the amount of movement d1 of the first touch point and the amount of movement d2 of the second points of touch in the pinching-out motion, and calculates a difference (an absolute value of the difference) between the amounts is greater than a predetermined threshold Th2 (step Sc1). The threshold Th2 may be determined based on a size of screen 101.

If a result of the determination in step Sc1 is YES, main controller 110 compares the amounts of movement d1 and d2 (step Sc2). If the amount of movement d1 is larger, main controller 110 unfolds individual icons associated with n category icons selected from the top of the screen 101 (step Sc3). If the amount of movement d2 is larger, main controller 110 unfolds individual icons associated with n category icons selected from the bottom of the screen 101 (step Sc4). Similary to the parameter m described above, the parameter n is an integer and more than two and less than the number of all categories.

If the determination in step Sc1 is NO, main controller 110 performs the multi-unfolding of the second embodiment (step Sc5). A processing of step Sc5 is similar to the series of the process starting from step Sa1 and ending with step Sa5, which is described above (Refer to Fig. 7).

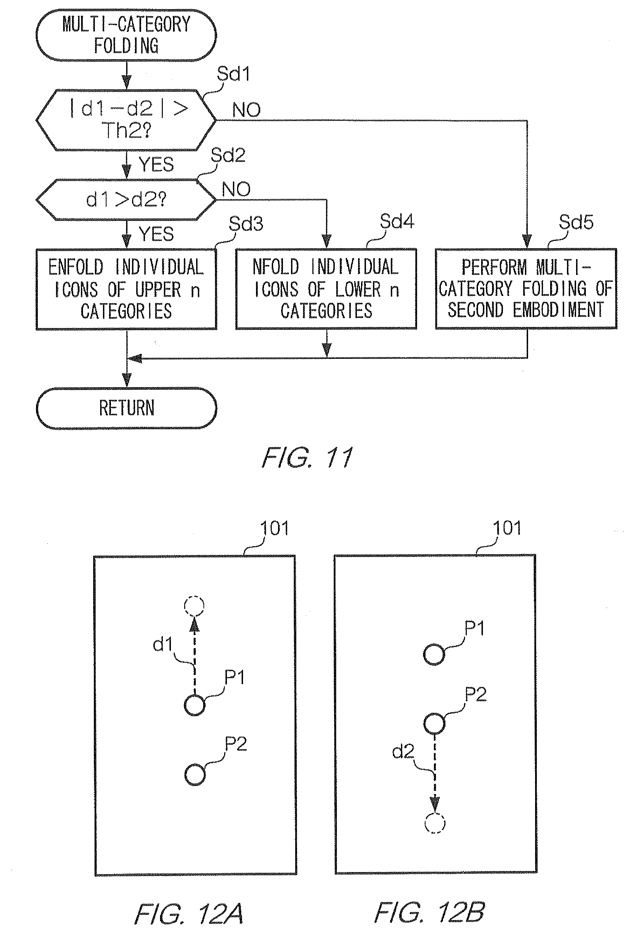

Fig. 11 is a flowchart showing a collective folding of this embodiment. This processing is similar to the collective unfolding shown in fig. 10, except that "unfolding" is replaced with "enfolding". Thus, detailed explanation thereof is omitted. It is noted that values of the parameter n are not necessarily the same in collective unfolding and collective enfolding.

Fig. 12 shows an example of the amounts of movement d1 and d2. P1 and P2 represent an initial first point of touch and second points of touch, respectively. A dashed line represents a trajectory of a point of touch. Fig. 12A describes an example of a motion in which the first point of touch (with a forefinger) moves upward and the second point of touch (with a thumb) stays at the initial position where d1>d2. Fig. 12B describes an example of a motion in which the second point of touch (forefinger) moves downward and the first point of touch stays at the initial position where d1>d2. It is not necessary that one of the amounts of movement d1 and d2 is zero, that is, either one is necessarily remains in a same position). Simply put, whether a relative movement of the two fingers exceeds the threshold Th2 is determined.

In this embodiment, similarly to the second embodiment, a category icon(s) within which individual icons are to be enfolded/unfolded is determined based on a position of a point of touch. For example, when the second point of touch remains in a same position and movement of the first point of touch is detected as shown in Fig. 12A, main controller 110 does not unfold individual icons of category icons located below the second point of touch and unfolds individual icons of category icons located above the second point of touch. In this way, the user is imparted with a feeling that the user's motion of keeping a finger at a same position to pin a corresponding category icon(s) prevents the category icon(s) from being enfolded/unfolded.

### Modifications

A scope of the present invention is not limited to the embodiments described above and the present invention can be implemented as other embodiments. For example, the present invention can be implemented based on the modified embodiments' provided below. Also, the present invention can be implemented based on a combination of the modified embodiments. Characteristic features of the embodiments described above are selectively combined to implement the present invention. As an example, an unfolding of individual icons is performed based on the second embodiment and a folding of individual icons is performed based on the third embodiment.
(1) Although a screen for displaying an image and a sensing surface that senses a user's motion physically overlap in the above described embodiments, an input unit of the present invention does not necessarily include a sensor provided overlapping with the screen. For example, a touch pad, which is also referred to as a track pad or slide pad, may be employed to sense a user's motion.
(2) Individual icons of the present invention do not necessarily represent functionalities of the applications. For example, in the present invention, individual icons consist of an image in a thumbnail-size or the like, representative of image data or audio data, and a category icon is an image (such as a folder-shaped image) for categorizing data. An individual icon of the present invention may represent an electronic ticket described above. An individual icon is an example of an image assigned to data for identifying the data.
   A category icon of the present invention may be an image displayed on the background of individual icons, partially overlapping the individual icons. Also, a category icon of the present invention disappears when the individual icons are in an unfolded state and displayed again when the individual icons are in the enfolded state. Simply put, details of a category icon of the present invention are not restricted to the above embodiments, as long as a category icon represents a category of individual icons. It is possible for the number of categories or category icons to be one. In this case, similarly to the embodiments described above, the user can change a display status of individual icons by an intuitive operation to enfold/unfold individual icons in response to a pinching-out motion or pinching-in motion.
(3) In the above described embodiments, only a part of the icon list is displayed when a number of individual icons is large, without a size of individual icons changing. It is possible to display all the individual icons within a screen by changing a size of the individual icons or category icons
(4) In the present invention instructions can be input by a stylus or other pointing devices held by a user or put on a hand, not by fingers. In this case, the input unit may detect a position of a pointing device described above by infrared light or ultrasonic wave. When a magnetic material is provided with the pointing device at its end, a position may be detected magnetically. Simply put, a touch screen is not necessarily provided with a display apparatus of the present invention. A pinching-in motion or pinching-out motion may be performed using a finger of one hand and a finger of the other hand.
   A user's touching of a screen is not necessarily to input opinion information. For example, when a detection of touch screen 130 of display apparatus 100 is performed based on a change in a capacity, the position of a finger may be detected when the finger is approaching screen 101.
(5) In the present invention, a tapping is not necessarily used for selecting a particular category icon(s) from a plurality of category icons. Other motions can be used for the selection as long as a motion is distinctive from a pinching-out motion and pinching-in motion. For example, such a motion includes a double tapping.
(6) The present invention can be applied adapted for a game console, audio player, e-book reader or other electronic devices. It is possible to implement the present invention by co-operating an apparatus having a screen and other apparatus provided independently from the display apparatus that controls the display apparatus.
   In this case, the other apparatus has at least the functionality shown in Fig. 4. The input unit or the screen is not necessarily provided with the other apparatus. The present invention provides a program for implementing the functionality shown in Fig. 4 and a storage medium in which the program is stored. The pogrom can be downloaded from a sever to an electronic device via a network and installed in be installed in the device.

## Claims

1. A display apparatus comprising:
a display having a screen in which an image is displayed;
an input unit having a surface on which a user's touch is sensed;
a display controller that displays a plurality of individual icons and one or more category icons each of which represents a category of one or more individual icons; and
a motion recognition unit that detects a pinching-out motion to widen a distance between two points touching the surface based on a motion sensed by the input unit,
wherein the display controller changes a state of one or more individual icons associated with at least one category from an enfolded state in which the one or more individual icons are not displayed to an unfolded state in which the one or more individual icons are displayed.

2. The display apparatus of Claim 1, wherein the display controller changes a number of categories with which one or more individual icons are displayed in the unfolded state, based on an amount or velocity of the two points of touch in the pinching-out motion detected by the motion recognition unit.

3. The display apparatus of Clam 1 or 2, wherein the display controller changes the one or more categories within which the one or more individual icons are displayed in the unfolded state based on the positions of the two points of touch detected by the motion recognition unit

4. The display apparatus of any one of Claims 1 to 3, wherein the display controller changes the one or more categories within which the one or more individual icons are displayed in the unfolded state based on a difference in amounts of movement of the two points of touch in the pinching-out motion detected by the motion recognition unit.

5. The display apparatus of any one of Claims 1 to 4, wherein;
the motion recognition unit detects a pinching-in motion in which two points of touch move to narrow a distance between the two points, based on the user's touch sensed by the input unit; and
upon detection of the pinching-in motion by the motion recognition unit, the display controller, changes the state of the one or more individual icons associated with at least one of the one or more categories, from the unfolded state to the enfolded state.

6. The display apparatus of Claim 5, wherein the display controller changes a number of the one or more categories within which the one or more individual icons are not displayed, based on an amount of movement or velocities of the two points of touch in the pinching-in motion detected by the motion recognition unit.

7. The display apparatus of Claim 5 or 6, wherein the display controller changes the one or more categories within which the one or more individual icons are not displayed in the enfolded state, based on positions of the two points of touch in the pinching-in motion detected by the motion recognition unit.

8. The display apparatus of any one of Claims 5 to 7, wherein the display controller changes the one or more categories within which the one or more individual icons are not displayed in the enfolded state based on a difference in amounts of movement of the two points of touch in the pinching-in motion detected by the motion recognition unit.

9. A display apparatus comprising:
a display having a screen in which an image is displayed;
an input unit having a surface on which a user's touch is sensed;
a display controller that displays a plurality of individual icons and one or more category icons each of which represents a category of one or more individual icons; and
a motion recognition unit that detects a motion by which a distance of two points of touch changes based on the user's touch sensed by the input unit, wherein the display controller,
changes a state of one or more individual icons associated with at least one category between an enfolded state in which the one or more individual icons are not displayed and an unfolded state in which the one or more individual icons are displayed.

10. A method of generating a user interface at a display apparatus in which a display that displays a plurality of individual icons and one or more category icons, each of which category icons represents a category of one or more individual icons on a screen and an input unit having a surface on which user's touch is sensed are provided, the method comprising:
a first step of detecting a pinching-out motion to widen a distance between two points of touch on the surface when one or more category icons are displayed on the screen; and
a second step of changing, upon detection of the pinching-out motion, a state of one or more individual icons associated with at least one category from an enfolded state, in which the one or more individual icons are not displayed, to an unfolded state in which the one or more individual icons are displayed.

11. A program that causes a computer of a display apparatus, in which a display that displays a plurality of individual icons and one or more category icons each of which represents a category of one or more individual icons on a screen and an input unit having a surface on which user's touch is sensed are provided, to execute:
a first step of detecting a pinching-out motion to widen a distance between two points touching the surface when one or more category icons are displayed on the screen; and
a second step of changing, upon detection of the pinching-out motion, a state of one or more individual icons associated with at least one category from an enfolded state in which the one or more individual icons are not displayed to an unfolded state in which the one or more individual icons are displayed.
